# EUROPÄISCHE PATENTSCHRIFT

(11) **EP 0 509 343 B1**
(45) Veröffentlichungstag und Bekanntmachung des Hinweises auf die Patenterteilung: **17.07.1996**
(21) Anmeldenummer: 92105757.6
(22) Anmeldetag: 03.04.1992
(51) Int. Cl.: H02M 3/335

(54) **Verfahren zum Betreiben eines Schaltreglers sowie Anordnung**
Method for operating a switching regulator and its arrangement
Méthode de fonctionnement d'un régulateur à découpage et son dispositif

(30) Priorität: 15.04.1991 DE 4112240
(43) Veröffentlichungstag der Anmeldung: 21.10.1992
(73) Patentinhaber: ROBERT BOSCH GMBH, 70442 Stuttgart (DE)
(72) Erfinder: Grünsch, Eckhardt, W-7173 Mainhardt (DE)

(56) Entgegenhaltungen:
- EP-A- 0 205 630
- EP-A- 0 259 775
- DE-A- 2 715 571
- US-A- 3 373 334
- US-A- 4 037 271
- US-A- 4 648 015

## Beschreibung

Die Erfindung betrifft ein Verfahren zum Betreiben eines Schaltreglers gemäß dem Oberbegriff des Patentanspruchs 1. Ein Schaltregler, dem ein solches Verfahren zugrunde liegt, ist bekannt aus US 4,037,271.

Bei Schaltreglern wird die Länge der Einschaltpulse für das Stellglied üblicherweise in Abhängigkeit der Ausgangsspannung und/oder des Stromes durch das Stellglied geregelt (DE 27 15 571 C2). Aus der EP 205 630 B1 ist es bekannt, die Länge der Einschaltpulse für das Stellglied in Abhängigkeit des Stromes durch das Stellglied zu regeln, wobei die Pausenzeit zwischen je zwei Einschaltpulsen konstant gehalten wird. Aus IEEE Transactions on Power Electronics, Vol. PE-1, No. 3, July 86, Seiten 181 bis 191 ist es bekannt, die Länge der Einschaltpulse für das Stellglied in Abhängigkeit der Höhe der Eingangsspannung und der Ausgangsspannung zu regeln. Beim Schaltregler gemäß US 4,037,271 wird die Einschaltzeit des Stellgliedes von der Eingangsspannung und die Ausschaltzeit in Abhängigkeit der Ausgangsspannung geregelt. Zur Verhinderung von Überströmen ist ein Detektor vorgesehen, der das Stellglied bei zu hohen Energieaufnahmeströmen abschaltet. Bei einem Schaltregler gemäß US 3,373,334 ist ein Pulsbreitenmodulator vorgesehen, bei dem zugeführte Rechteckimpulse in Abhängigkeit der Eingangsspannung pulsbreitenmoduliert werden. In Abhängigkeit der Ausgangsspannung wird die Pulswiederholfrequenz verändert.

Aufgabe der Erfindung ist es, ein Verfahren zum Betreiben eines Schaltreglers anzugeben, welches insbesondere für Schaltregler mit relativ hohen Schaltfrequenzen anwendbar ist und welches zu einem Schaltregler mit gutem dynamischen Verhalten führt.

Diese Aufgabe wird durch die Merkmale des Patentanspruchs 1 gelöst. Der Anspruch 4 zeigt einen Schaltregler zum Durchführen des Verfahrens gemäß Anspruch 1 auf. Die übrigen Ansprüche betreffen Weiterbildung des Verfahrens/des Schaltreglers.

Die Erfindung beruht auf folgenden Erkenntnissen:

Bei einer Vorwärtsregelung mit konstanter Pausenzeit für die Einschaltpulse stellt sich eine zu starke Frequenzvariation ein, sodaß diese Art von Schaltreglern nicht für Hochfrequenzanwendungen geeignet ist. Bei der Verwendung von reiner Pulsdauermodulation z.B. durch Steuerung des Spitzenstromes in Abhängigkeit von Eingangs- und/oder Ausgangssignalen des Schaltreglers machen sich oft Regelverzögerungen ungünstig bemerkbar. Aufwendige Hilfseinrichtungen, z.B. Sägezahngeneratoren mit Vergleichseinrichtungen und Stromerfassungseinrichtungen, sind bei der Erfindung nicht notwendig. Mit der Erfindung lassen sich Schaltregler mit Schaltfrequenzen von größer 300 kHz aufbauen. Schaltregler mit solchen Schaltfrequenzen ließen sich bisher nur mit Resonanzwandlern realisieren, die neben zusätzlichen resonanzbestimmenden Elementen im allgemeinen aufwendige Steuerschaltungen benötigen.

Anhand der Zeichnungen wird ein Ausführungsbeispiel der Erfindung nun näher erläutert. Es zeigen

Fig. 1 ein Prinzipschaltbild eines Schaltreglers zum Durchführen des Verfahrens nach der Erfindung.

Fig. 2 den zeitlichen Verlauf des Stromes durch das Schaltregler-Stellglied.

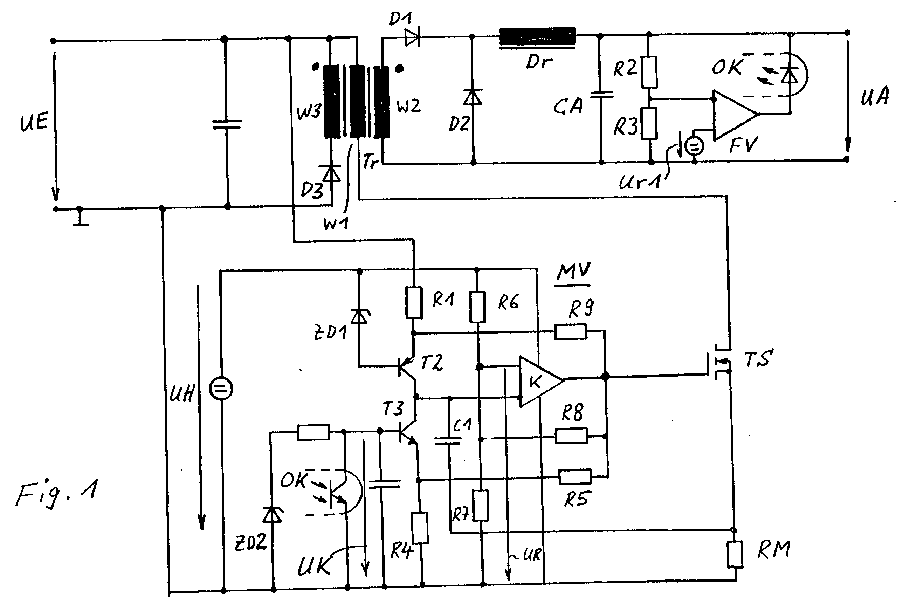

In der Figur 1 ist ein Schaltregler in Form eines Flußwandlers mit galvanischer Trennung dargestellt. Die Eingangsspannung UE des Schaltreglers ist an die Serienschaltung, bestehend aus der Primärwicklung W1 des Transformators Tr, dem Stellglied TS - hier als Feldeffekttransistor ausgebildet - und dem Strommeßwiderstand RM, gelegt. Der Sekundärkreis des Schaltreglers besteht aus der Sekundärwicklung W2 des Transformators Tr, dem Gleichrichter D1, der Freilaufdiode D2, der Glättungsdrossel Dr und dem ausgangsseitigen Glättungskondensator CA. An letzterem ist die Ausgangsspannung UA des Schaltreglers für Gleichspannungsverbraucher abnehmbar. Zur Abmagnetisierung des Transformators Tr ist eine übliche Abmagnetisierungswicklung W3 mit Diode D3 vorgesehen. Die Höhe der Ausgangsspannung UA des Schaltreglers wird über einen ersten Sensor - Spannungsteiler R2, R3 und daran angeschlossener Fehlersignalverstärker FV - erfasst. Sobald die Ausgangsspannung UA den Wert der Referenzspannung Ur1 am Referenzeingang des Fehlerverstärkers FV überschreitet, wird ein zur Höhe der Ausgangsspannung UA proportionales Signal über den Optokoppler OK in den primären Regelkreis übertragen und steht dort zur Regelung der Wiederholfrequenz der Einschaltpulse für das Schaltreglerstellglied TS zur Verfügung. Die Eingangsspannung UE des Schaltreglers liegt im Regelkreis an der Serienschaltung bestehend aus dem Widerstand R1, der Schaltstrecke des pnp-Schaltstrecke T2, der Schaltstrecke des npn-Schaltstrecke T3 und dem Widerstand R4 als erstem Sensor.
Das Stellglied TS wird über einen astabilen Multivibrator MV gesteuert, der als Schwellwertkomparator K mit einem Ladekondensator C1 als frequenzbestimmendem Element ausgebildet ist.

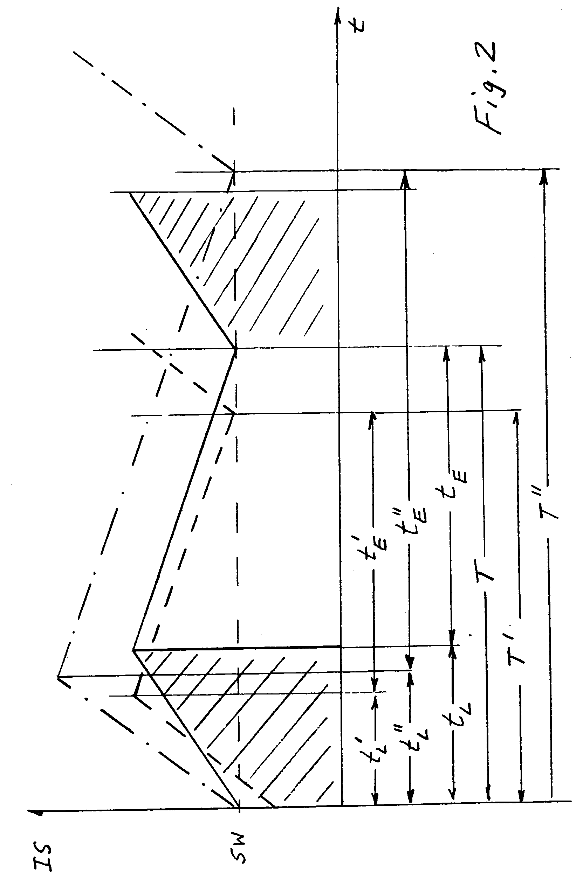

Der invertierende Eingang des Schwellwertkomparators ist sowohl mit den Kollektoren der Transistoren T2, T3 als auch mit einer Elektrode des Ladekondensators C1 verbunden. Die andere Elektrode des Ladekondensators C1 führt zum Verbindungspunkt zwischen Stellglied - Source des n-Kanal Feldeffekttransistors - und Strommeßwiderstand RM. Der Transistor T2 wirkt zusammen mit der Zenerdiode ZD1, die an der Hilfsspannung UH liegt, als Stromquelle, deren Strom über den Widerstand R1 in Abhängigkeit der Höhe der Eingangsspannung UE steuerbar ist. Der Transistor T3 wirkt zusammen mit der Zenerdiode ZD2 ebenfalls als Stromquelle, die in Abhängigkeit der Ausgangsspannung UA steuerbar ist. Hierzu ist die Ausgangsspannung UK des Optokopplers OK an die Basis des Transistors T3 geführt.
Zur Erklärung der Funktion der Regelschaltung sei folgender Anfangszustand angenommen. Der Komparator H weist ausgangsseitig H-Potential auf. Damit wird der Feldeffekttransistor TS leitend. Die Stromquelle, gebildet aus dem Transistor T3 wird dann über den Spannungsteiler R5, R4, der zwischen Ausgangs des Komparators K und Bezugsmasse liegt, unwirksam gemacht, indem das Emitterpotential des Transistors T3 über das Basispotential angehoben wird, so daß der Transistor T3 sperrt. Der Ladekondensator C1 war zuvor auf die untere Schaltschwelle des Komparators K entladen, welche durch die Beschaltung des Komparators K mit den Widerständen R6, R7 und R8 vorgegeben ist. Über die Stromquelle - Transistor T2 - wird nun der Ladekondensator C1 geladen, wobei über den Widerstand R1 der Ladestrom in Abhängigkeit der Höhe der Eingangsspannung UE gesteuert wird. Wenn nun die Eingangsspannung UE höher wird, ist der Anstieg des Stromes IS durch das Stellglied TS steiler (Fig. 2 gestrichelt) als bei niedrigerer Eingangsspannung (Fig. 2 durchgezogen). Es fließt dann ein höherer Ladestrom, d.h. der invertierende Eingang des Schwellwertkomparators K erreicht schneller ein höheres Potential als der nichtinvertierende Eingang. Der durch den Komparator K ausgebildete astabile Multivibrator MV kippt früher auf L-Potential und verkürzt damit die Einschaltzeit des Stellgliedes TS von t_{L} auf t_{L}' (Fig. 2). Wenn der Komparator K auf L-Potential springt, wird über die Widerstände R9 und R1 das Emitterpotential des Transistor T2 negativer als das Basispotential, wodurch Transistor T2 sperrt und damit die Ladestromquelle außer Betrieb setzt. Die Stromquelle - Transistor T3 - dagegen wird aktiviert, indem zum Emitterwiderstand R4 der Widerstand R5 über das L-Potential am Ausgang des Komparators K parallel geschaltet wird. Damit sinkt das Emitterpotential des Transistors T3 und der Strom durch die Stromquelle - Transistor T3 - ergibt sich dann aus der Spannung UK am Optokoppler, der Basisemitterspannung U_{BE} des Transistors T3 und der Parallelschaltung der Widerstände R4, R5. Der Ladekondensator C1 wird nun mit diesem Strom bis auf die untere Schaltschwelle des Komparators K entladen.
Die Zeit der Entladung t_{E} bzw. t_{E}' (Fig. 2) des Ladekondensators C1 richtet sich nach der Ausgangsspannung UA. Damit wird auch die Wiederholfrequenz 1/T der Einschaltpulse für das Stellglied TS bestimmt. Wie aus Fig. 2 ersichtlich ist, ergibt sich der Zeitpunkt des Wiedereinschaltens - Ende der Periodendauer T bzw. T' - des Stellgliedes TS jeweils aus dem Schnittpunkt einer Entladekennlinie mit dem unteren Schwellwert SW für den Komparator K. Wie Fig. 2 weiter zeigt haben die Entladekennlinien im Gegensatz zu den Ladekennlinien die gleiche Steigung.

Zur Verbesserung des dynamischen Verhaltens des Schaltreglers kann der Abschaltzeitpunkt und damit die Länge der Einschaltpulse - Ende der Leitezeit t_{L} bzw t_{L}' für das Stellglied TS zusätzlich von der Höhe des Energieaufnahmestroms IS gesteuert werden. Dazu wird der mit dem Strommeßwiderstand RM, der in Serie zum Ladekondensator C1 geschaltet ist, erfasste Strom IS eingekoppelt. Der Abschaltzeitpunkt des Stellgliedes TS hängt demnach von der Summe der von der Eingangsspannung UE abhängigen Größe und der vom Energieaufnahmestrom IS abhängigen Größe ab.
Der Einfluß der Eingangsspannung UE auf die Einschaltzeit t_{L}, t_{L}' wird z.B. so gewählt, daß bei Variation der Eingangsspannung UE die Wiederholfrequenz 1/T, 1/T' nahezu konstant ist, wobei der Einfluß des Fehlerverstärkers FV bei der Erfassung der Ausgangsspannung UA mitberücksichtigt ist. Diese Betriebsart hat den Vorteil einer einfachen Laststrombegrenzung, die ebenfalls an die Basis von Transistor T3 angeschlossen werden kann.

Wenn man die Einschaltzeit t_{E}, t_{E}' bei Erhöhung der Eingangsspannung UE nicht genügend zurückstellt, steigt der Energieaufnahmestrom IS stärker an (strichpunktiert in Fig. 2). Der höhere Energieaufnahmestrom IS würde zu einem Ansteigen der Ausgangsspannung UA führen, was jedoch vom Fehlerverstärker FV durch eine Verlängerung der Pausenzeit t_{E}'' beantwortet wird. Dies entspricht einer tieferen Wiederholfrequenz und damit insgesamt einer Konstanthaltung der Ausgangsspannung.

Wenn man den Einfluß der Eingangsspannung UE durch entsprechende Einstellung der Widerstände R1 und R9 zu groß macht; d.h. die Einschaltzeit t_{E}, t_{E}' kürzer macht als erforderlich, um die Wiederholfrequenz konstant zu halten, würde der Energieaufnahmestrom IS kleiner werden und die Ausgangsspannung UA absinken. Dies wird vom Fehlerverstärker FV durch ein Verkürzen der Pausenzeit t_{E}, bzw. t_{E}' beantwortet, was einer Erhöhung der Wiederholfrequenz entspricht. Es besteht somit eine Freiheit zur Dimensionierung des Schaltreglers. Eine Dimensionierung in Richtung Konstanthalten der Wiederholfrequenz der Einschaltimpulse hat den Vorteil, daß der Aufwand für die Eingangssiebung kleiner gehalten werden kann, da die Dimensionierung der Eingangssiebung immer von der tiefsten Wiederholfrequenz abhängig ist. Eine Dimensionierung in Richtung konstanter Spitzenwerte des Energieaufnahmestroms ist ebenfalls in Fig. 2 dargestellt (durchgezogene und gestrichelte Linien).

## Patentansprüche

1. Verfahren zum Betreiben eines Schaltreglers, wobei aus der Höhe der Eingangsspannung (UE) des Schaltreglers ein Kriterium für die Länge der Einschaltimpulse des Stellgliedes (TS) und aus der Höhe der Ausgangsspannung (UA) des Schaltreglers ein Kriterium für die Wiederholfrequenz der Einschaltpulse des Stellgliedes (TS) gewonnen wird, dadurch gekennzeichnet, daß für das Kriterium für die Länge der Einschaltpulse des Stellgliedes (TS) zusätzlich die Höhe des Energieaufnahmestromes (IS) durch das Stellglied (TS) herangezogen wird und daß der Einfluß der Höhe der Eingangsspannung (UE) auf die Länge der Einschaltpulse des Stellgliedes (TS) so gewählt wird, daß bei Variation der Eingangsspannung (UE) die Wiederholfrequenz der Einschaltpulse oder der Spitzenstrom durch das Stellglied (TS) in etwa konstant ist.

2. Schaltregler zum Durchführen des Verfahrens nach Anspruch 1, der einen Primär-und Sekundärkreis aufweist, wobei im Primärkreis ein über einen astabilen Multivibrator gesteuertes Stellglied (TS) und dazu in Reihe einen Stromsensor aufweist und wobei ein erster Sensor (R1, T2, T3, R4) zur Erfassung eines zur Eingangsspannung (UE) des Schaltreglers proportionalen Signals, ein zweiter Sensor (R2, R3, FV) zur Erfassung eines zur Ausgangsspannung (UA) des Schaltreglers proportionalen Signals, vorgesehen ist dadurch gekennzeichnet, daß der Einschaltzeitpunkt des astabilen Multivibrators (MV), über den ersten Sensor (R1, T2, T3, R4) von der Eingangsspannung (UE) und dessen Abschaltzeitpunkt über den zweiten Sensor (R2, R3, FV) von der Ausgangsspannung (UA) und über den Stromsensor (RM) vom Energieaufnahmestrom (IS) steuerbar ist.

3. Schaltregler nach Anspruch 2, gekennzeichnet durch folgende Beschaltung:
ein Schwellwertkomparator (K), dessen Ausgang mit dem Stellglied (TS) verbunden ist, ist an einem Eingang mit einer Referenzspannung (UR) beaufschlagt und am anderen Eingang mit einem Ladekondensator (C1) als frequenzbestimmendem Element des Multivibrators (MV) verbunden,
der Ladekondensator (C1) ist über eine erste Stromquelle (T2) aufladbar, deren Strom über den ersten Sensor (R1, T2, T3, R4) in Abhängigkeit der Höhe der Eingangsspannung (UE) steuerbar ist,
der Ladekondensator (C1) ist über eine zweite Stromquelle (T3) entladbar, deren Strom über den zweiten Sensor (R2, R3, RV) in Abhängigkeit der Ausgangsspannung (UA) steuerbar ist.

4. Schaltregler nach Anspruch 3, dadurch gekennzeichnet, daß der Ladekondensator (C1) in Serie zu einem Strommeßwiderstand (RM) für die Erfassung des Energieaufnahmestromes (IS) durch das Stellglied (TS) geschaltet ist.

## Claims

1. Method for operating a switched-mode regulator, a criterion for the length of the turn-on pulses of the actuator (TS) being obtained from the level of the input voltage (U) of the switched-mode regulator, and a criterion for the repetition frequency of the turn-on pulses of the actuator (TS) being obtained from the level of the output voltage (UA) of the switched-mode regulator, characterized in that the level of the power consumption current (IS) through the actuator (TS) is additionally used for the criterion for the length of the turn-on pulses of the actuator (TS), and in that the influence of the level of the input voltage (UE) on the length of the turn-on pulses of the actuator (TS) is selected in such a way that, given variation of the input voltage (UE), the repetition frequency of the turn-on pulses or the peak current through the actuator (TS) is approximately constant.

2. Switched-mode regulator for carrying out the method according to Claim 1, which regulator has a primary and secondary circuit, the latter having, in the primary circuit, an actuator (TS), which is controlled by means of an astable multivibrator, and, in series with the said actuator, a current sensor, and there being provided a first sensor (R1, T2, T3, R4) for detecting a signal which is proportional to the input voltage (UE) of the switched-mode regulator, a second sensor (R2, R3, FV) for detecting a signal which is proportional to the output voltage (UA) of the switched-mode regulator, characterized in that the turn-on instant of the astable multivibrator (MV) can be controlled, via the first sensor (R1, T2, T3, R4), by the input voltage (UE), and the turn-off instant of the said multivibrator can be controlled, via the second sensor (R2, R3, FV), by the output voltage (UA) and, via the current sensor (RM), by the power consumption current (IS).

3. Switched-mode regulator according to Claim 2, characterized by the following circuitry:
a threshold value comparator (K), the output of which is connected to the actuator (TS), has a reference voltage (UR) applied to one input and is connected at its other input to a charging capacitor (C1) as the frequency-determining element of the multivibrator (MV),
the charging capacitor (C1) can be charged via a first current source (T2), the current of which can be controlled, via the first sensor (R1, T2, T3, R4), as a function of the level of the input voltage (UE),
the charging capacitor (C1) can be discharged via a second current source (T3), the current of which can be controlled, via the second sensor (R2, R3, RV), as a function of the output voltage (UA).

4. Switched-mode regulator according to Claim 3, characterized in that the charging capacitor (C1) is connected in series with a current measuring resistor (RM) for detecting the power consumption current (IS) through the actuator (TS).

## Revendications

1. Procédé de fonctionnement d'un régulateur à découpage selon lequel à partir de l'amplitude de la tension d'entrée (UE) du régulateur à découpage, on forme un critère pour la longueur des impulsions de branchement de l'organe de réglage (TS) et à partir de l'amplitude de la tension de sortie (UA) du régulateur à découpage, on forme un critère pour la fréquence de répétition des impulsions de branchement de l'organe de réglage (TS), caractérisé en ce que pour le critère relatif à la longueur des impulsions de branchement de l'organe de réglage (TS) on utilise en plus l'amplitude du flux d'énergie (IS) à travers l'organe de réglage (TS) et on choisit l'influence de l'amplitude de la tension d'entrée (UE) en fonction de la longueur des impulsions de commutation de l'organe de réglage (TS) pour que pendant une variation de la tension d'entrée (UE), la fréquence de répétition des impulsions de branchement ou du courant maximum à travers l'organe de réglage (TS) soit sensiblement constant.

2. Régulateur à découpage pour la mise en oeuvre du procédé selon la revendication 1, comprenant un circuit primaire et un circuit secondaire, avec dans le circuit primaire un élément de réglage (TS) commandé par l'intermédiaire d'un multivibrateur astable et en série un capteur de courant, ainsi qu'un premier capteur (R1, T2, T3, R4) pour détecter un signal proportionnel à la tension d'entrée du régulateur à découpage, un second capteur (R2, R3, FV) pour détecter un signal proportionnel à la tension de sortie (UA) du régulateur à découpage,
caractérisé en ce que l'instant de branchement du multivibrateur astable (MV) est commandé par le premier capteur (R1, T2, T3, R4) à partir de la tension d'entrée (UE) et son point de coupure est commandé par le second capteur (R2, R3, FV) à partir de la tension de sortie (UA) et du flux d'énergie reçu (IS) par le capteur de courant (RM).

3. Régulateur à découpage selon la revendication 2, caractérisé par les moyens suivant :
- un comparateur à seuil (K) dont la sortie est reliée à l'organe de réglage (TS), reçoit sur une entrée, une tension de référence (UR) et est relié par une autre entrée à un condensateur de charge (C1) constituant un élément définissant la fréquence du multivibrateur astable (MV),
- un condensateur de charge (C1) monté en tant qu'élément de fixation de la fréquence du multivibrateur (MC),
- le condensateur de charge (C1), se charge à partir d'une première source de courant (T2) dont le courant est commandé par le premier capteur (R1, T2, T3, R4) en fonction de l'amplitude de la tension d'entrée (UE),
- le condensateur de charge (C1) se charge par une seconde source de courant (T3) dont le courant est commandé par le second capteur (R2, R3, RV) en fonction de la tension de sortie (UA).

4. Régulateur à découpage selon la revendication 3, caractérisé en ce que le condensateur de charge (C1) est branché en série sur une résistance de mesure de courant (RM) pour détecter le flux d'énergie reçu (IS) par l'organe de réglage (TS).
